# EUROPEAN PATENT APPLICATION

(11) **EP 4 576 724 A1**
(43) Date of publication of application: **25.06.2025**
(21) Application number: 23218816.9
(22) Date of filing: 20.12.2023
(51) Int. Cl.: H04L 47/24, H04W 28/02, H04W 28/06, H04W 28/24, H04W 72/543, H04L 47/80

(54) **METHOD OF OPERATING A NETWORK ELEMENT OF A COMMUNICATION NETWORK**

(71) Applicant: Robert Bosch GmbH, 70442 Stuttgart (DE)
(72) Inventor: Suer, Marie-Theres, 38102 Braunschweig (DE); Ginthoer, David Osamu, 70197 Stuttgart (DE); Guillaume, Rene, 71032 Boeblingen (DE)

(57) **Abstract**

A method (100; 200; 300) of transmitting of operating a network element (12, 14; 18; 20) of a communication network (10), wherein the communication network (10) comprises a wired time sensitive network and/or a wireless network, an application of the communication network (10) comprises at least two operational modes with different quality of service (QoS) requirements and the method (100; 200; 300) comprises:
- Receiving, by the network element (12, 14; 18; 20), a QoS information containing a performance probability of the communication network (10);
- Receiving, by the network element (12, 14; 18; 20), a requirement information containing a QoS requirement of the application regarding the performance probability of the communication network (10)
and
- Requesting, by the network element (12, 14; 18; 20),
∘ for an adaption of the operational mode of the application and/or ∘ for rescheduling of resources
based on the QoS requirement contained in the requirement information and the performance probability contained in the QoS information.

## Description

The invention concerns a method of operating a network element of a communication network, wherein the communication network comprises a wired time sensitive network and/or a wireless network and an application of the communication network comprises at least two operational modes with different quality of service (QoS) requirements. Further, the invention concerns a corresponding network element of a communication network, a computer program, and a non-transitory computer readable medium.

### Background

For a wired time-sensitive network (TSN) the link speeds may be considered to be constant. Therefore, the schedule according to IEEE 802.1 Qbv can be calculated once and kept fixed. Wireless communication standards like Wi-Fi and 5G are enhanced by IEEE and 3GPP such that the communication characteristics become more similar to wired networks. This makes it suitable to use these technologies also in combined wired and wireless TSNs. In a wireless TSN, the situation is more dynamic as the surroundings can change over time. As an example, interference from other systems may influence a link speed, a transmission delay, a data rate and a transmission reliability. The resulting link characteristics are reported to the central network configuration (CNC) by the (logical) TSN switches via link managed objects. Additionally, the link managed objects may include probabilities for reaching certain deadlines or probabilities for certain amounts of consecutive packet losses.

Applications of the communication network may require a specific QoS for transmitting data packets. If the link quality along a network path is not sufficient to support the requirements of the application, the CNC may be configured, depending on its capabilities, to calculate the schedule differently, e.g., by checking for alternative network paths or discarding other applications of lower priority. In case the QoS requirement of the application cannot be met, the application needs to be rejected or not even admitted.

### Disclosure of the invention

According to a first aspect, there is provided a method of operating a network element of a communication network, wherein the communication network comprises a wired time sensitive network and/or a wireless network and an application of the communication network comprises at least two operational modes with different QoS requirements.

The method according to the first aspect comprises:
- Receiving, by the network element, a QoS information containing a performance probability of the communication network;
- Receiving, by the network element, a requirement information containing a QoS requirement of the application regarding the performance probability of the communication network
   and
- Requesting, by the network element,
   ∘ for an adaption of the operational mode of the application and/or
   ∘ for rescheduling of resources
   based on the QoS requirement contained in the requirement information and the performance probability contained in the QoS information.

According to a second aspect, there is provided a network element of a communication network, wherein the communication network comprises a wired time sensitive network and/or a wireless network and an application of the communication network comprises at least two operational modes with different QoS requirements. The network element comprises, a non-transitory computer readable medium comprising machine-readable instructions, and a processor configured to load and to execute the machine-readable instructions to cause the network element to execute the method according to the first aspect, and/or its embodiments. The network element can be a central network element, for instance, a central user configuration (CUC) or a central network configuration (CNC) of a TSN, or a talker or listener of a TSN.

According to a third aspect, there is provided a computer program comprising machine-readable instructions to cause the network element as defined by the second aspect to execute the steps of the method according to the first aspect, and/or its embodiments.

According to a fourth aspect, there is provided a non-transitory computer readable medium having stored thereon the computer program as defined by the third aspect.

The communication network may be configured as a TSN. Preferably, the communication network comprises both a wired TSN and a wireless network. The wired TSN can be configured, e.g., as an Ethernet network according to IEEE 802.3. The wireless network can be a wireless Local Area Network (LAN), specifically a WiFi network, preferably according to IEEE 802.11 be, or a 3GPP network.

The application of the communication network may require a transmission, specifically a stream, of data packets in the communication network. Here, the stream can be understood as a unidirectional flow of data packets in the communication network. Preferably, the application requires a stream of data packets from a talking element or talker of the communication network to a listening element or listener of the communication network. The talker may be a first, preferably non-stationary, end device and the listener a second, preferably non-stationary, end device of the communication network. Talker and listener may be connected by one or multiple parallel or serial communication links and network elements of the communication network, e.g., TSN link(s), TSN bridge(s) etc. Data packets of the application may comprise payload like sensor data, multimedia data etc. For instance, a stream of data packets of an application may comprise a video stream.

Importantly, for each of the at least two operational modes or operational states the application requires a transmission of data packets in the communication network. However, the QoS requirements differ between the at least two operational modes. More precisely, a first operational mode of the application may require a higher or lower QoS than a second operational mode of the application. Clearly, the application may comprise a further operational mode which is independent from a transmission of data packets in the communication network.

The QoS information contains a performance probability of the communication network. Here, the performance probability may regard a performance probability of individual or multiple network elements and/or individual or multiple network links of the communication network. For instance, the performance probability may regard a TSN switch or bridge or a TSN link. Additionally or alternatively, the performance probability may regard an end-to-end performance probability of all network elements and network links of a transmission path from the talker to the listener. The QoS information may contain a current or actual and/or a predicted or future performance probability of the communication network.

The performance probability may be represented or characterized by a latency, a bandwidth, jitter, deadline for data packet delivery, packet loss ratio. The performance probability may be determined based on network information, e.g., representing network properties and/or comprising network performance parameters. The network properties and/or network performance parameters may be selected from a group comprising:
- a cycle time of an application requiring a stream of data packets transmitted in the communication network,
- a size, specifically of a frame, of the data packets transmitted in the communication network,
- a mobility of non-stationary end devices and/or users of the communication network,
- (past/current/predicted) channel conditions of network channels of the communication network, e.g., latency, signal interference noise ratio (SINR), reference signal received power (RSRP), dynamics of network channels, traffic load in network channels.

The network information may be provided by one of the network elements, preferably by a TSN switch or bridge of the communication network. The performance probability may be determined by one of the network elements of the communication network, e.g., a TSN bridge or a CNC.

The requirement information containing the QoS requirement of the application is preferably provided by the application itself. As explained above and below, the QoS requirement depends on the operational mode or state of the application.

The adaption of the operational mode may be requested by the end device, e.g., the talker or listener, the application is assigned to. To this end, the QoS information containing performance probability needs to be provided to the end device. Notably, the adaption of the operational mode may also be requested by a central network element, preferably a CUC or a CNC. To this end, the requirement information needs to be provided to the respective central network element.

The introduced method allows to decrease the probability of an application failure due to insufficient QoS. By allowing for adapting the operational mode of the application, thus changing the QoS requirement on the network, the application may continue to run in a reduced operational mode instead of being discarded. In other words, the applications do not need to stop but can run in a reduced operational state until the network quality improves so they can move back to their preferred operational state. This is particularly beneficial for mission critical applications, especially in the industrial automation domain, for which application failures may have severe consequences, e.g., a stop of an entire production line.

According to an embodiment, the performance probability regards a loss of data packets in the communication network. As an example, the performance probability may be presented or characterized by a packet loss ratio. Preferably, the performance probability regards
- a time between successful transmissions of two consecutive data packets of the application in the communication network, and/or
- a number of consecutive data packet losses of the application in the communication network.
The time between successful transmissions of consecutive data packets can be understood as a time difference between the successful reception of consecutive data packets. A successful transmission can be defined as a transmission that is successful both content-wise and timewise. More precisely, a successful transmission can be considered as a transmission in which the data packet is transmitted correctly, i.e., without error, and received within a predefined time or predefined deadline.

A consecutive data packet loss can be understood as corresponding to two consecutive data packets that are not transmitted successfully, i.e., that are received not within the predefined-time and/or not transmitted correctly, i.e., with error. A successful transmission may be a transmission which is acknowledged explicitly or implicitly, particularly by transmitting an acknowledgement (ACK).

The maximum time between successful transmissions of consecutive data packets and/or the maximum number of consecutive data packet losses in the wireless LAN may depend on a survival time of the application, i.e., a time the application may run without reception of a (valid) data packet. In other words, the maximum time and/or the maximum number defines a time and/or number respectively which is acceptable to or tolerable by the application. For an application with periodic data transmission, the requirement regarding the maximum time can be derived from the requirement regarding the maximum number and vice versa.

The consideration of consecutive packet losses is particularly beneficial for mission critical applications, especially in the industrial automation domain, for which application outages may have severe consequences.

According to an embodiment, the received requirement information contains a QoS requirement for a current operational mode of the application and/or for each of the at least two operational modes of the application. Specifically, an end device like talker and/or listener of the communication network may be configured to provide the requirement information with QoS requirements for the current operational mode and/or each of the at least two operational modes to central network elements, in particular to the CUC and/or via the CUC to the CNC. The requirement information can be transmitted or signaled during initialization of the application and/or after adapting an operational mode of the application and/or in case of changing QoS requirements of a current application mode and/or cyclically. This allows to further reduce application outages, particular in communication networks with multiple applications running in parallel. Also, for an individual application, considering both a current and an alternative operation mode of the application allows both for more efficient scheduling and pro-active requesting of application mode adaptions.

According to an embodiment, the method further comprises a step of comparing, preferably by the network element, the received performance probability and the received QoS requirement, wherein the adaption of the operational mode of the application and/or the rescheduling of resources is requested in case the comparison indicates a violation of the QoS requirement. The violation of the QoS requirement may be an actual and/or predicted violation of the QoS requirement. Comparing the performance probability and the QoS requirement may also include comparing the performance probability with each individual QoS requirement of the at least two operational modes of the application, preferably with all QoS requirements contained in the received QoS information. This allows to avoid or immediately react to violations of the QoS requirement, thus effectively increasing the reliability of the application.

According to an embodiment, the adaption of the operational mode comprises switching from a current operational mode of the application to an adapted operational mode of the application, wherein the QoS requirement of the adapted operational mode is different, preferably lower than the current operational mode. Specifically, the method may comprise a step of switching or changing from the current operational mode to the adapted operational mode based on the request.

According to an embodiment rescheduling resources comprises at least one of:
- Increasing a priority of data packets of the application and/or assigning additional resources for transmitting the data packets of the application;
- Duplicating specific or all data packets of the application and transmitting the duplicated data packets via different links in the communication network.
Here, the priority may be increased for specific or all data packets of the application. Consequently, the corresponding traffic streams are scheduled with higher priority and/or additional resources are allocated to the critical streams.

For a communication network with at least one wireless domain, e.g., a LAN or a 3GPP network, a higher priority might be given to critical streams in ODFMA scheduling. For the transmission of duplicated data packets multi-link operation (MLO) may be used.

For a communication network with at least one wireless domain, rescheduling resources may also comprise at least one of
- Decreasing an order of a modulation and coding scheme (MCS) used for transmitting specific or all data packets of the application;
- Adapting a timer deadline for retransmissions of specific or all data packets of the application.
Decreasing the MCS order, i.e., using a lower MCS, for data packets of critical streams allows to increase the probability of a successful transmission on the first attempt. The timer deadline for retransmissions may be adapted in dependence on a specified deadline and/or in dependence on a specified survival time of the application.

According to an embodiment,
- the network element is an end device, preferably a talker and/or a listener of a TSN,
- the received QoS information is transmitted from a central network element of the communication network, preferably a CUC, to the end device, and
- optionally, requesting for an adaption comprises transmitting a request for adapting the operational mode of the application to the application and/or requesting for rescheduling comprises transmitting a request for rescheduling resources to the central network element, preferably to the CUC, and/or a further central network element, preferably to a CNC via the CUC.

According to an embodiment, the method comprises a further step of
- Transmitting, by the end device, preferably after adaption of the operational mode, an operational mode information regarding characteristics of the current, preferably adapted, operational mode of the application to the central network element and/or the further central network element for scheduling of resources in the communication network.
In other words, updated information about the operational state(s) of the application is provided to the central network element(s). The characteristics may be represented by stream parameters like an interval, i.e., a rational number of seconds, a maximum size of a frame in a stream of data packets of the application, a maximum number of (maximum sized) frames that can be transmitted for a stream of the application in one interval etc. The characteristics to be transmitted or signaled may be included in a stream request update message. This allows to schedule resources more efficiently and to request adaption of the operational mode of the application pro-actively to further reduce application outages.

According to an embodiment
- the network element is a central network element, preferably a CUC,
- the received requirement information is transmitted from an end device, preferably a talker and/or listener, to the central network element,
- the received QoS information is transmitted from a further central network element of the communication network, preferably a CNC, to the central network element, and
- optionally, requesting for an adaption comprises transmitting a request for adapting the operational mode of the application to the end device and/or requesting for rescheduling comprises transmitting a request for rescheduling resources to the further central network element.

According to an embodiment
- the network element is a central network element, preferably a CNC,
- the received requirement information is transmitted from an end device via a further central network element, preferably a CUC, to the central network element,
- the received QoS information is transmitted from a further network element of the communication network of the communication network to the central network element, and,
- optionally, requesting for an adaption comprises transmitting a request for adapting the operational mode of the application via the further central network element to the end device.
The further network element may be a TSN bridge, a wireless network element, preferably an access point or a base station or a gNodeB, of the communication network.

According to a further aspect, there is provided a communication network, specifically a TSN, preferably comprising a wired TSN and a wireless network, wherein the communication network comprises at least one network element according to the second aspect. Here, the network preferably comprises a first and a second network element according to the second aspect configured as an end device, a third and fourth network element according to the second aspect configured as central network elements, preferably as CNC and CUC, and preferably at least one further network element, e.g., a TSN bridge.

The non-transitory computer readable medium is preferably configured to store the computer program to be executed by a processor of the network element. The non-transitory computer readable media may include RAM, ROM, EEPROM, and any other non-volatile storage device.

### Description of the figures

Exemplary embodiments of the present invention are depicted in the figures, which are not to be construed as limiting the claims, and are explained in greater detail below.
- Fig. 1: schematically shows the architecture of a communication network according to an aspect of the invention; and
- Fig. 2: schematically illustrates a method according to the first aspect.

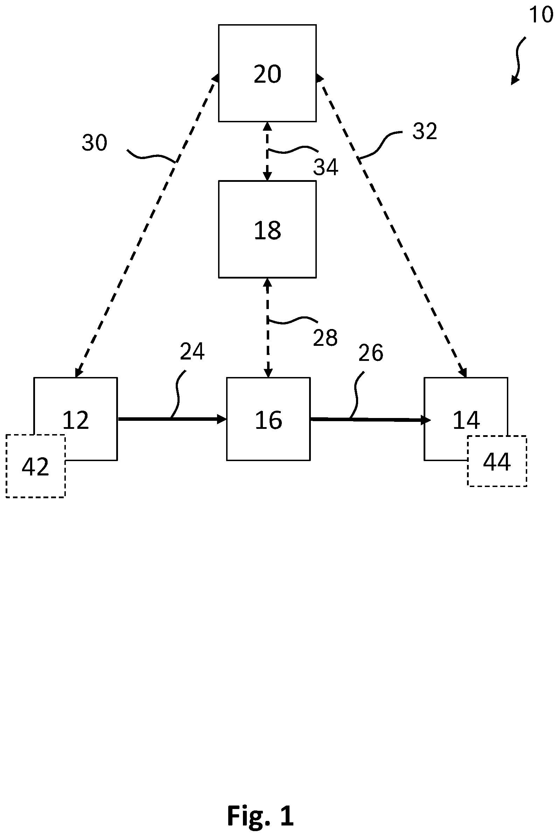

Fig. 1 schematically shows the architecture of a communication network 10 according to an aspect of the invention. The communication network 10 is configured as a time sensitive network (TSN) 10.

The TSN 10 comprises a first network element 12 configured as a TSN talker 12 and a second network element 14 configured as a TSN listener 14. Besides, the TSN 10 comprises at least one further network element 16 configured as a TSN switch 16 or TSN bridge 16. The TSN bridge 16 may be a logical TSN bridge 16 comprising one or more wireless links. Moreover, the TSN 10 comprises a centralized network configuration (CNC) 18 and a centralized user configuration (CUC) 20.

The TSN talker 12 is configured to transmit data packets to the TSN bridge 16 using a TSN link 24. The TSN bridge 16 is configured to receive data packets transmitted from the TSN talker 12 using the TSN link 24 and to transmit data packets to the TSN listener 14 using the TSN link 26. In addition, the TSN bridge 16 is configured to transmit control information to and/or receive control information from the CNC 18 using the configuration link 28. The TSN listener 14 is configured to receive data packets transmitted from the TSN bridge 16 using the TSN link 26.

The TSN talker 12 and the TSN listener 14 are configured to transmit control information to and/or receive control information from the CUC 20 using the configuration links 30, 32. The CUC is configured to transmit control information to and/or receive control information from the TSN talker 12 and the TSN listener 14 using the configuration links 30, 32 as well as to and from the CNC 18 using a configuration link 34. The CNC 18 is configured to transmit control information to and/or receive control information from the CUC 20 using the configuration link 34 and from and to the TSN bridge 16 using the configuration link 28.

Specifically, the CUC 20 is configured to receive requirements from the talker 12 and/or the listener 14 and to communicate them to the CNC 18. The CNC 18 is configured to receive consolidated requirements from the CUC 20, to schedule streams of data packets in the TSN 10 and to configure the TSN bridge 16.

An application of the TSN 10 may require a stream of data packets from a transmitting part 42 of the talker 12 via the TSN bridge 16 to a receiving part 44 of the listener 14. Here, the application may require a specific end-to-end QoS (E2 E QoS), i.e., regarding the QoS for a transmission of the data packet from the talker 12 to the listener 14. As an example, the E2E QoS includes a maximum time between successful transmissions of consecutive data packets from the talker 12 to the listener 14. Additionally or alternatively, the E2E QoS includes a maximum number of consecutive data packet losses between the talker 12 and the listener 14.

According to the proposed invention, the application comprises two operational modes with different E2E QoS requirements. For instance, the application may require a stream of video data from the talker 12 to the listener 14, wherein in a first operational mode a video quality is higher or lower than in a second operational mode, e.g., due to using more or less robust coding. As an alternative example, the application may be related to the operation of automated (guided) vehicles, wherein in a first operational mode of the application a speed of the vehicles is higher or lower than is a second operational mode, thus reducing or increasing requirements on the communication latency for control messages transmitted to and/or by the vehicles.

For the purpose of decreasing the probability of an application failure and for avoiding the necessity to discard the application it is proposed to either adapt the operational mode of the application and/or to reschedule resources based on a QoS requirement of the application and a performance probability of the TSN 10.

The QoS requirement and the performance probability may regard a loss of data packets, e.g., a packet loss rate, preferably at least one of a maximum time between successful transmissions of consecutive data packets or a maximum number of consecutive data packet losses in the TSN 10, preferably in the TSN bridge 16.

According to a first embodiment, the talker 12 and/or the listener 14 comprise a non-transitory computer readable medium comprising machine-readable instructions, and a processor configured to load and to execute the machine-readable instructions to cause the talker 12 and/or the listener 14 to
- receive QoS information containing a performance probability of the TSN 10 from the CUC 20,
- receive or obtain a requirement information containing a QoS requirement of the application regarding the performance probability of the TSN from the application,
   and
- request,
   ∘ for an adaption of the operational mode of the application and/or
   ∘ for rescheduling of resources
   based on the QoS requirement contained in the requirement information and the performance probability contained in the QoS information.
Here, the talker 12 and/or listener are configured to request the application to adapt its operational mode. For requesting for rescheduling of resources, the talker 12 and/or listener are configured to transmit a respective request to the CNC, preferably via the CUC using the configuration link 30 or 32, and the configuration link 34.

The CUC 20 comprises a non-transitory computer readable medium comprising machine-readable instructions, and a processor configured to load and to execute the machine-readable instructions to cause the CUC 20 to
- receive QoS information containing a performance probability of the TSN 10 from the CNC 18 and to transmit the received QoS information to the talker 12 and/or the listener 14, and
- to receive a request for rescheduling of resources transmitted from the talker 12 and/or the listener 14 and to transmit or forward the received request for rescheduling of resources to the CNC 18.

The CNC 18 comprises a non-transitory computer readable medium comprising machine-readable instructions, and a processor configured to load and to execute the machine-readable instructions to cause the CNC 18 to
- receive QoS information containing a performance probability of the TSN 10 from the TSN bridge 16 and to transmit the received QoS information to the CUC 20,
- to receive a request for rescheduling of resources transmitted from the CUC 20, and
- reschedule resources based on the received request or transmit a request to discard the application to the CUC 20.

In other words, the application can compare the expected link quality with its QoS requirements and can adapt to an operational mode with lower QoS requirements if the QoS provided by the TSN 10 is not sufficient to support the applications' preferred operational mode. The application can then report to the CUC 20 if it accepts the schedule or not. If the application does not accept the schedule, the CNC 18 can either re-calculate the schedule or discard the application. Preferably, the application is continuously informed about the current and/or expected QoS of the TSN, e.g., in terms of a TSN state update, so they can regularly update their operational mode accordingly.

The performance probability representing the current and/or expected QoS could be included in a bridge or link managed object used for providing the current network state of the TSN bridge 16 and/or its links 24, 26 to the CNC 18. The CNC 18 is preferably configured to forward the performance probability to the CUC 20.

If an operational mode with different, specifically, lower QoS, is accepted and adapted by the application, the talker 12 and/or the listener 14 may be configured to signal characteristics of this adapted operational mode, in particular by transmitting stream parameters like an interval, i.e., a rational number of seconds, a maximum size of a frame in a stream of data packets of the application, a maximum number of (maximum sized) frames that can be transmitted for a stream of the application in one interval etc. The characteristics are signaled to the CUC 20, e.g., by transmitting a stream request update message using the configuration links 30, 32.

According to a second embodiment, the talker 12 and/or the listener 14 comprise a non-transitory computer readable medium comprising machine-readable instructions, and a processor configured to load and to execute the machine-readable instructions to cause the talker 12 and/or the listener 14 to
- receive or obtain a requirement information containing a QoS requirement of the application regarding the performance probability of the TSN from the application and transmit the requirement information to the CUC 20, and
- receive a request for an adaption of the operational mode of the application transmitted from the CUC 20.
Here, the requirement information preferably comprises QoS requirements for each of the at least two operational modes of the application, specifically including a QoS requirement for a current operational mode of the application.

The CUC 20 comprises a non-transitory computer readable medium comprising machine-readable instructions, and a processor configured to load and to execute the machine-readable instructions to cause the CUC 20 to
- receive QoS information containing a performance probability of the TSN 10 from the CNC 18,
- receive a requirement information containing a QoS requirement of the application regarding the performance probability of the TSN from the talker 12 and/or listener 14,
- request,
   ∘ for an adaption of the operational mode of the application by transmitting a request to the talker 12 and/or listener 14, and/or
   ∘ for rescheduling of resources by transmitting a request to the CNC 18
   based on the QoS requirement contained in the requirement information and the performance probability contained in the QoS information.

The CNC 18 comprises a non-transitory computer readable medium comprising machine-readable instructions, and a processor configured to load and to execute the machine-readable instructions to cause the CNC 18 to
- receive QoS information containing a performance probability of the TSN 10 from the TSN bridge 16 and to transmit the received QoS information to the CUC 20,
- to receive a request for rescheduling of resources transmitted from the CUC 20, and
- reschedule resources based on the received request or transmit a request to discard the application to the CUC 20.

According to a third embodiment, the talker 12 and/or the listener 14 comprise a non-transitory computer readable medium comprising machine-readable instructions, and a processor configured to load and to execute the machine-readable instructions to cause the talker 12 and/or the listener 14 to
- receive or obtain a requirement information containing a QoS requirement of the application regarding the performance probability of the TSN from the application and transmit the requirement information to the CUC 20,
   and
- receive a request for an adaption of the operational mode of the application transmitted from the CUC 20.
Here, the requirement information preferably comprises QoS requirements for each of the at least two operational modes of the application, specifically including a QoS requirement for a current operational mode of the application.

The CUC 20 comprises a non-transitory computer readable medium comprising machine-readable instructions, and a processor configured to load and to execute the machine-readable instructions to cause the CUC 20 to
- receive a requirement information containing a QoS requirement of the application regarding the performance probability of the TSN from the talker 12 and/or listener 14 to transmit the received QoS information to the CUC 20,
- receive a request for an adaption of the operational mode of the application transmitted from the CNC 18 and to transmit the received request to the talker 12 and/or listener 14.

The CNC 18 comprises a non-transitory computer readable medium comprising machine-readable instructions, and a processor configured to load and to execute the machine-readable instructions to cause the CNC 18 to
- receive QoS information containing a performance probability of the TSN 10 from the TSN bridge 16,
- receive a requirement information containing a QoS requirement of the application regarding the performance probability of the TSN 10 transmitted from the talker 12 and/or listener 14 via the CUC 20, and
- reschedule resources based on the received request or transmit a request for an adaption of the operational mode of the application to the CUC 20.

In other words, according to the second and/or third embodiment, the talker 12 and/or listener 14 of the TSN 10 are configured to share if their application supports different operational modes or states and what the QoS requirements of the different states are. The CNC 18 is configured to take these operational modes and their QoS requirements into consideration during the schedule calculation, at least in an initialization phase. Further, the CNC 18 and/or the CUC 20 is configured to report to the talker 12 and/or listener 14 which operational state the application should use based on a performance probability of the TSN 10, preferably on a probability for consecutive losses of data packets in the TSN 10. Besides, the CNC 18 and/or the CUC 20 are configured to report to the talker 12 and/or the listener 14 to switch or change a current operational state or mode of the application to an adapted operational state or mode with a different QoS requirement in case the performance probability of the TSN 10, preferably a link quality of wireless links in the TSN 10, changes during operation. The request to change or switch to an adapted operational state may be transmitted or signaled to the talker 12 and/or listener 14 using an operational state change request message transmitted from the CUC 20 or from the CNC 18 via the CUC 20 using the configuration links 34 and 30/32.

Consequently, the CNC 18 is configured to receive a QoS information or network state update regarding the performance probability of the network at least during initializing of the TSN 10, preferably during operation of the TSN 10, specifically when the application is running, and optionally provide or forward the QoS information to the CUC 20. To this end, a TSN bridge or link managed object containing the QoS information may be transmitted, preferably cyclically, from the TSN bridge 16 to the CNC 18. Additionally or alternatively, a signal that is independent from the TSN bridge or link managed object and contains the QoS information may be transmitted, preferably cyclically, from the TSN bridge 16 to the CNC 18.

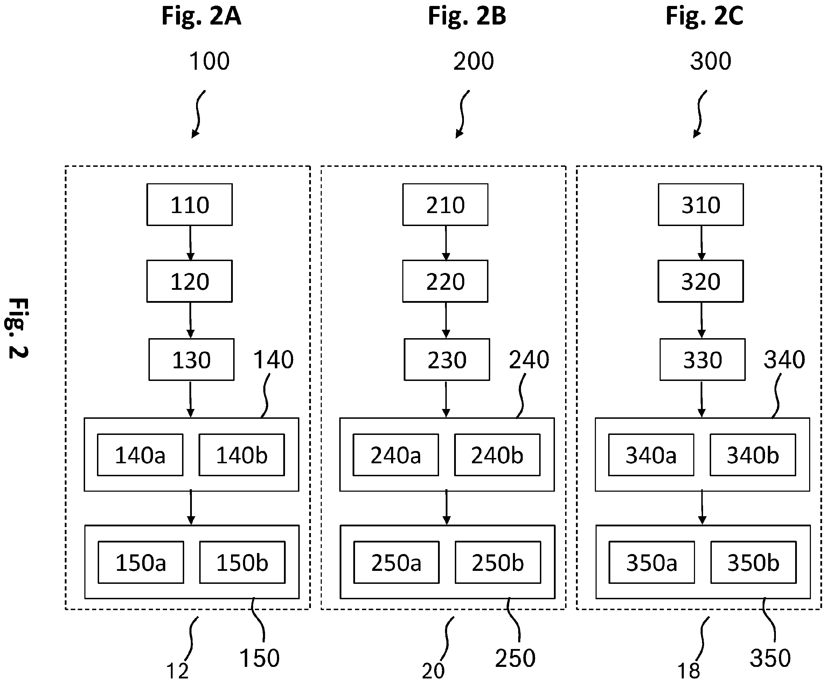

Fig. 2 schematically illustrates methods of operating a network element of a communication network according to embodiments of the invention.

Fig. 2A schematically illustrates a method 100 of operating a network element configured as an end device 12, preferably as a talker 12 or listener of a TSN.

In step 110, a QoS information containing a performance probability of the communication network is received by the end device 12. The received QoS information is preferably transmitted from a central network element of the communication network, preferably from a central user configuration or from a central network configuration via the central user configuration, to the end device 12.

In step 120, a requirement information containing a QoS requirement of the application regarding the performance probability of the communication network is received by the end device 12. The received QoS requirement is preferably provided by the application itself.

In step 130, the received performance probability and the received QoS requirement is compared by the end device 12. In case the comparison indicates a violation of the QoS requirement, an adaption of the operational mode of the application is requested by the end device 12 in step 140a. Alternatively, rescheduling of resources is requested in step 140b by transmitting a request for rescheduling resources from the end device 12 the central network element, specifically by transmitting the request via the central network element to a further central network element, preferably a central network configuration of the TSN. Here, the steps 140a and 140b are denoted by reference sign 140.

In step 150a, a current operational mode of the application is switched to an adapted operational mode of the application by the end device 12, wherein the QoS requirement of the adapted operational mode is different, preferably lower than the current operational mode such that the QoS requirement of the adapted operational mode is met by the performance probability of the network. Alternatively, in step 150b resources are rescheduled, preferably by the further central network element, specifically by
- Increasing a priority of data packets of the application and/or assigning additional resources for transmitting the data packets of the application; and/or
- Duplicating specific or all data packets of the application and transmitting the duplicated data packets via different links in the communication network.
Here, the steps 150a and 150b are denoted by reference sign 150.

Fig. 2B schematically illustrates a method 200 of operating a network element configured as a central network element 20, preferably a central user configuration 20 of a TSN.

In step 210, a QoS information containing a performance probability of the communication network is received by the central network element 20. The received QoS information is preferably transmitted from a further central network element, preferably a central network configuration, of the communication network to the central network element.

In step 220, a requirement information containing a QoS requirement of the application regarding the performance probability of the communication network is received by the central network element 20. The received QoS requirement is preferably transmitted by an end device of the communication network to the central network element 20.

In step 230, the received performance probability and the received QoS requirement is compared by the central network element 20. In case the comparison indicates a violation of the QoS requirement, an adaption of the operational mode of the application is requested by the central network element 20 in step 240a. To this end, a request for adapting the operational mode of the application is transmitted from the central network element 20 to the end device.

Alternatively, rescheduling of resources is requested in step 240b by transmitting a request for rescheduling resources from the central network element 20 to the further central network element.

In step 250a, a current operational mode of the application is switched to an adapted operational mode of the application in analogy to step 150a. Alternatively, in step 250b resources are rescheduled, preferably by the further central network element, in analogy to step 150b. Here, the steps 250a and 250b are denoted by reference sign 250.

Fig. 2C schematically illustrates a method 300 of operating a network element configured as a central network element 18, preferably a central network configuration 18 of a TSN.

In step 310, a QoS information containing a performance probability of the communication network is received by the central network element 18. The received QoS information is preferably transmitted from a network element, preferably a bridge of TSN, to the central network element 18.

In step 320, a requirement information containing a QoS requirement of the application regarding the performance probability of the communication network is received by the central network element 18. The received QoS requirement is preferably transmitted from an end device of the communication network via a further central network element, preferably a central user configuration, of the communication network to the central network element 18.

In step 330, the received performance probability and the received QoS requirement is compared by the central network element 18. In case the comparison indicates a violation of the QoS requirement, an adaption of the operational mode of the application is requested by the central network element 18 in step 340a. To this end, a request for adapting the operational mode of the application is transmitted from the central network element 18 via the further central network element to the end device. Alternatively, rescheduling of resources is initiated in step 340b by the central network element 18. Here, the steps 340a and 340b are denoted by reference sign 340.

In step 350a, a current operational mode of the application is switched to an adapted operational mode of the application in analogy to step 150a. Alternatively, in step 350b resources are rescheduled by the central network element 18 in analogy to step 150b. Here, the steps 350a and 350b are denoted by reference sign 350.

## Claims

1. A method (100; 200; 300) of operating a network element (12, 14; 18; 20) of a communication network (10), wherein the communication network (10) comprises a wired time sensitive network and/or a wireless network, an application of the communication network (10) comprises at least two operational modes with different quality of service (QoS) requirements and the method (100; 200; 300) comprises:
- Receiving (110; 210; 310), by the network element (12, 14; 18; 20), a QoS information containing a performance probability of the communication network (10);
- Receiving (120; 220; 320), by the network element (12, 14; 18; 20), a requirement information containing a QoS requirement of the application regarding the performance probability of the communication network (10) and
- Requesting (140; 240; 340), by the network element (12, 14; 18; 20),
∘ for an adaption of the operational mode of the application and/or
∘ for rescheduling of resources
based on the QoS requirement contained in the requirement information and the performance probability contained in the QoS information.

2. The method (100; 200; 300) according to claim 1, wherein the performance probability regards a loss of data packets in the communication network (10), preferably
∘ a time between successful transmissions of two consecutive data packets of the application in the communication network (10),
and/or
∘ a number of consecutive data packet losses of the application in the communication network (10).

3. The method (100; 200; 300) according to claim 1 or 2, wherein the received requirement information contains a QoS requirement for a current operational mode of the application and/or for each of the at least two operational modes of the application.

4. The method (100; 200; 300) according to one of the proceeding claims, further comprising a step of comparing (130; 230; 240) the received performance probability and the received QoS requirement, wherein the adaption of the operational mode of the application and/or the rescheduling of resources is requested in case the comparison indicates a violation of the QoS requirement.

5. The method (100; 200; 300) according to one of the proceeding claims, wherein the adaption of the operational mode comprises switching from a current operational mode of the application to an adapted operational mode of the application, wherein the QoS requirement of the adapted operational mode is different, preferably lower than the current operational mode.

6. The method (100; 200; 300) according to one of the proceeding claims, wherein rescheduling resources comprises at least one of:
- Increasing a priority of data packets of the application and/or assigning additional resources for transmitting the data packets of the application;
- Duplicating specific or all data packets of the application and transmitting the duplicated data packets via different links in the communication network (10);
- Decreasing an order of a modulation and coding scheme (MCS) used for transmitting specific or all data packets of the application;
- Adapting a timer deadline for retransmissions of specific or all data packets of the application.

7. The method (100; 200; 300) according to one of the proceeding claims,
wherein
- the network element (12, 14; 18; 20) is an end device (12, 14),
- the received QoS information is transmitted from a central network element (20) of the communication network (10) to the end device (12, 14), and
- optionally, requesting for an adaption comprises transmitting a request for adapting the operational mode of the application to the application and/or requesting for rescheduling comprises transmitting a request for rescheduling resources to the central network element (20) and/or a further central network element (18).

8. The method (100; 200; 300) according claim 7, further comprising:
- Transmitting, by the end device (12, 14), preferably after adaption of the operational mode, an operational mode information regarding characteristics of the current, preferably adapted, operational mode of the application to the central network element (20) and/or the further central network element (18) for scheduling of resources in the communication network (10).

9. The method (100; 200; 300) according to one claims 1 to 6, wherein
- the network element (20) is a central network element (20),
- the received requirement information is transmitted from an end device (12, 14) to the central network element (20),
- the received QoS information is transmitted from a further central network element (18) of the communication network (10) to the central network element (20), and,
- optionally, requesting for an adaption comprises transmitting a request for adapting the operational mode of the application to the end device (12, 14) and/or requesting for rescheduling comprises transmitting a request for rescheduling resources to the further central network element (18).

10. The method (100; 200; 300) according to one of claims 1 to 6, wherein
- the network element (18) is a central network element (18),
- the received requirement information is transmitted from an end device (12, 14) via a further central network element (20) to the central network element (18),
- the received QoS information is transmitted from a further network element of the communication network (10) to the central network element (18), and,
- optionally, requesting for an adaption comprises transmitting a request for adapting the operational mode of the application via the further central network element (20) to the end device (12, 14).

11. A network element (12, 14; 18; 20) of a communication network (10), wherein the communication network (10) comprises a wired time sensitive network and/or a wireless network, an application of the communication network (10) comprises at least two operational modes with different quality of service (QoS) requirements and the network element (12, 14; 18; 20) comprises
- a non-transitory computer readable medium comprising machine-readable instructions, and
- a processor configured to load and to execute the machine-readable instructions to cause the network element (12, 14; 18; 20) to execute the method (100; 200; 300) according to one of claims 1 to 10.

12. A computer program comprising machine-readable instructions to cause the network element (12, 14; 18; 20) according to claim 11 to execute the method (100; 200; 300) according to one of claims 1 to 10.

13. A non-transitory computer readable medium having stored thereon the computer program according to claim 12.
